# EUROPEAN PATENT APPLICATION

(11) **EP 4 607 781 A1**
(43) Date of publication of application: **27.08.2025**
(21) Application number: 25159982.5
(22) Date of filing: 25.02.2025
(51) Int. Cl.: H02M 3/335, H02M 7/487, H02M 1/00

(54) **DC/DC CONVERTER**

(30) Priority: 26.02.2024 US 202463557678 P; 20.12.2024 US 202418990379
(71) Applicant: Schneider Electric IT Corporation, Foxboro, MA 02035 (US)
(72) Inventor: COELHO-MEDEIROS, Rafael, Grenoble (FR); MELIGY, Ahmed Hany Mohamed Khalil, Grenoble (US)
(74) Representative: Plasseraud IP

(57) **Abstract**

Examples of the disclosure include a DC/DC converter including an input configured to be coupled to a DC power source, a sparse active neutral point clamped converter (SANPC) coupled to the input, a plurality of transformers coupled to the SANPC, the plurality of transformers including a first transformer and a second transformer, a first AC/DC converter coupled to the first transformer, a second AC/DC converter coupled to the second transformer, and at least one output coupled to the first AC/DC converter and the second AC/DC converter and configured to provide DC output power to one or more loads.

## Description

### BACKGROUND

### 1. Field of the Disclosure

At least one example in accordance with the present disclosure relates generally to power converters.

### 2. Discussion of Related Art

Power devices, such as power converters, may be used to provide power to one or more loads. Power converters can convert power from one form (for example, AC power) to another form (for example, DC power). Power converters can also modify parameters of converted power, such as by increasing or decreasing a voltage level of the converted power.

### SUMMARY

Examples of the methods and systems discussed herein are not limited in application to the details of construction and the arrangement of components set forth in the following description or illustrated in the accompanying drawings. The methods and systems may be capable of implementation in other embodiments and of being practiced or of being carried out in various ways. Examples of specific implementations are provided herein for illustrative purposes and are not intended to be limiting. Acts, components, elements, and features discussed in connection with any one or more examples may be configured to operate and/or be implemented in a similar role in any other examples.

The phraseology and terminology used herein is for the purpose of description. References to examples, embodiments, components, elements, or acts of the systems and methods herein referred to in the singular may also embrace embodiments including a plurality. Similarly, references in plural to embodiments, components, elements, or acts may be implemented as a singularity. References in the singular or plural form may therefore not be intended to limit the presently disclosed systems or methods, their components, acts, or elements. The use herein of "including," "comprising," "having," "containing," "involving," and variations so forth, may encompass the items listed thereafter and equivalents thereof as well as additional items.

References to "or" may be construed as inclusive so that any terms described using "or" may indicate any of a single, more than one, and all of the described terms. For example, the phrase "at least one of A or B" may refer A and/or B-that is, A only, B only, or A and B together. For irreconcilable differences, the term usage in this document controls.

The disclosure is defined in the appended set of claims.

### BRIEF DESCRIPTION OF THE DRAWINGS

Various aspects of at least one embodiment are discussed below with reference to the accompanying figures, which may not be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or substantially similar component that is illustrated in various figures may be represented by a like numeral. For purposes of clarity, not every component may be labeled in every figure. In the figures:
FIG. 1 illustrates a block diagram of a power system according to an example;
FIG. 2 illustrates a schematic diagram of a power system according to an example;
FIG. 3 illustrates a chart of switching states for a power converter according to an example; and
FIG. 4 illustrates a schematic diagram of the power converter in an example switching state indicated by FIG. 3 according to an example; and
FIG. 5 illustrates a set of graphs depicting operation of the power converter according to an example.

### DETAILED DESCRIPTION

As discussed above, power converters can provide power to one or more loads. For example, a DC/DC power converter may receive DC power, convert the DC power, and provide the converted DC power to one or more loads. However, different DC/DC converters may have different output configurations depending on requirements of the one or more loads.

For example, one output configuration includes a symmetrical monopolar configuration, and another output configuration includes a bipolar configuration. In a symmetrical monopolar configuration, a power converter has two output connections to couple to a load: a positive connection and a negative connection. In a bipolar configuration, a power converter has three output connections to couple to a load: a positive connection, a neutral connection, and a negative connection. A monopolar power converter provides a single output at full voltage, and a bipolar power converter provides two outputs each at half the full voltage.

Different loads may be better suited for different power module configurations. For example, a symmetrical monopolar configuration may be better suited for electric-vehicle (EV)-charging stations, amongst other types of loads. A bipolar configuration may be better suited for information technology (IT) loads in a data center, amongst other types of loads. It may be advantageous to provide a power converter capable of operating in both a symmetrical monopolar configuration and a bipolar configuration. Such a power converter can be used to power more types of loads (for example, both EV-charging stations and IT loads, rather than one or the other) and may therefore be more useful than a power converter that can only operate in one configuration.

Examples of the disclosure include a power converter capable of satisfying loads compatible with either a bipolar configuration or a symmetrical monopolar configuration. Example power converters may power an arbitrary number of loads, each of which may operate at a different voltage level. Furthermore, efficiency may be improved by executing an efficient switching scheme with switches of different voltage ratings. Higher-rated switches may be switched only at zero current. Lower-rated switches may be switched at currents which are greater than zero, but which are kept at a minimal level by forbidding switching states that would lead to higher currents. Accordingly, examples of the disclosure provide a flexible and efficient power converter.

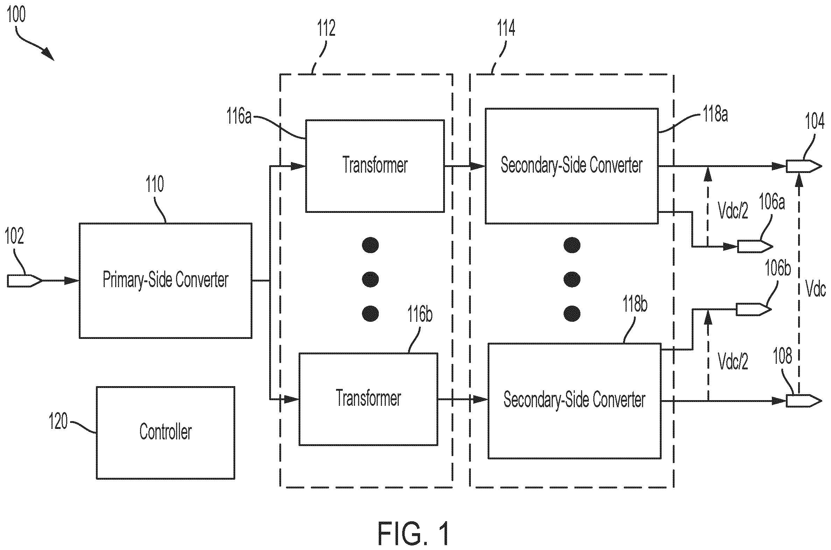

FIG. 1 illustrates a block diagram of a power converter 100 according to an example. The converter 100 may be a DC/DC power converter. The power converter 100 includes an input 102, a positive output connection 104, a first neutral output connection 106a and a second neutral output connection 106b (collectively, a neutral output connection 106), a negative output connection 108, a primary-side converter 110, an arbitrary number of at least two transformers 112 ("transformers 112"), and an arbitrary number of at least two secondary-side converters 114. In various examples, the number of transformers 112 may be equal to the number of the secondary-side converters 114. In various examples, the primary-side converter 110 may be implemented as a sparse active neutral point clamped (SANPC) power converter.

For ease of explanation, examples are provided with respect to a configuration in which the transformers 112 comprise two transformers-including a first transformer 116a and a second transformer 116b-and the secondary-side converters 114 comprise two converters, including a first secondary-side converter 118a and a second secondary-side converter 118b. In other examples, other numbers of transformers 112 and secondary-side converters 114 (for example, more than two each) are within the scope of the disclosure. The power converter 100 further includes at least one controller 120 ("controller 120"), which may be communicatively coupled to one or more of the primary-side converter 110, the transformers 112, and/or the secondary-side converters 114. For simplicity of illustration, the communicative connections to the controller 120 are not explicitly illustrated.

The input 102 is coupled to the primary-side converter 110, and may be configured to be coupled to a source of DC power. For example, the input 102 may be configured to be coupled to an AC/DC converter configured to receive AC power from an AC utility grid, convert the AC power to DC power, and provide the DC power to the input 102.

The output connections 104-108 are configured to be coupled to one or more loads. Two or more of the output connections 104-108 may collectively act as at least one output. One or more loads may be coupled to the output connections 104-108 in any of various configurations. For example, a single load may be coupled to the output connections 104-108 in a bipolar configuration, or a single load may be coupled to the output connections 104-108 in a redundant monopolar configuration, or multiple loads may be coupled to the output connections 104-108 in a symmetrical monopolar configuration (for example, one load coupled to the output connections 104, 106a, which act as one output, and one load coupled to the output connections 106b, 108, which act as another output), and so forth. In some examples, the output connections 106a, 106b may be electrically coupled to one another and thus be considered a single neutral output connection 106.

The primary-side converter 110 is coupled between the input 102 and the transformers 112. The primary-side converter 110 receives DC power from the input 102, converts the DC power to AC power, and provides the AC power to the transformers 112.

The transformers 112 are coupled between the primary-side converter 110 and the secondary-side converters 114. For example, the first transformer 116a is coupled to the primary-side converter 110 (for example, at a primary-winding side) and to the first secondary-side converter 118a (for example, at a secondary-winding side), and the second transformer 116b is coupled to the primary-side converter 110 (for example, at a primary-winding side) and to the second secondary-side converter 118b (for example, at a secondary-winding side). The transformers 112 receive AC power from the primary-side converters 110 and provide induced AC power to the secondary-side converters 114.

The secondary-side converters 114 are coupled between the transformers 112 and the output connections 104-108. For example, the first secondary-side converter 118a is coupled to the first transformer 116a at an input and to the positive output connection 104 and the first neutral output connection 106a at an output, and the second secondary-side converter 118b is coupled to the second transformer 116b at an input and to the second neutral output connection 106b and the negative output connection 108 at an output.

The output connections 104-108 are coupled to the secondary-side converters 114 and are configured to be coupled to at least one load. For example, the positive output connection 104 may be coupled to the first secondary-side converter 118a and may be configured to be coupled to a load. The neutral output connections 106a, 106b may be coupled to the secondary-side converters 118a, 118b, and may be configured to be coupled to at least one load. The negative output connection 108 may be coupled to the second secondary-side converter 118b and may be configured to be coupled to a load.

As noted above, the power converter 100 can support various load configurations. In one example, a single load may be coupled to the positive output connection 104 and the negative output connection 108. The single load may receive a full-voltage output Vdc from the power converter 100. In another example, one load may be coupled to the positive output connection 104 and the first neutral output connection 106a, and another load may be coupled to the second neutral output connection 106b and the negative output connection 108. Each load may receive half of the full-voltage output Vdc/2 from the power converter 100. Although the neutral output connections 106a, 106b may be electrically coupled together in some examples, in examples in which a first load is coupled to connections 104, 106a and a second load is coupled to the connections 106b, 108, the two loads may draw power independently of one another; accordingly, the neutral output connections 106a, 106b are illustrated as separate connections.

In still another example, a single load may be coupled to the positive output connection 104 and the first neutral output connection 106a, and may be redundantly coupled to the second neutral output connection 106b and the negative output connection 108. In this example, the load may receive a Vdc/2 output from across the positive output connection 104 and the first neutral output connection 106a and, if power stops being available at some future point (for example, because of a failure of the first secondary-side converter 118a), the load may instead draw the Vdc/2 output from across the second neutral output connection 106b and the negative output connection 108. Thus, this single load drawing Vdc/2 has access to redundant power.

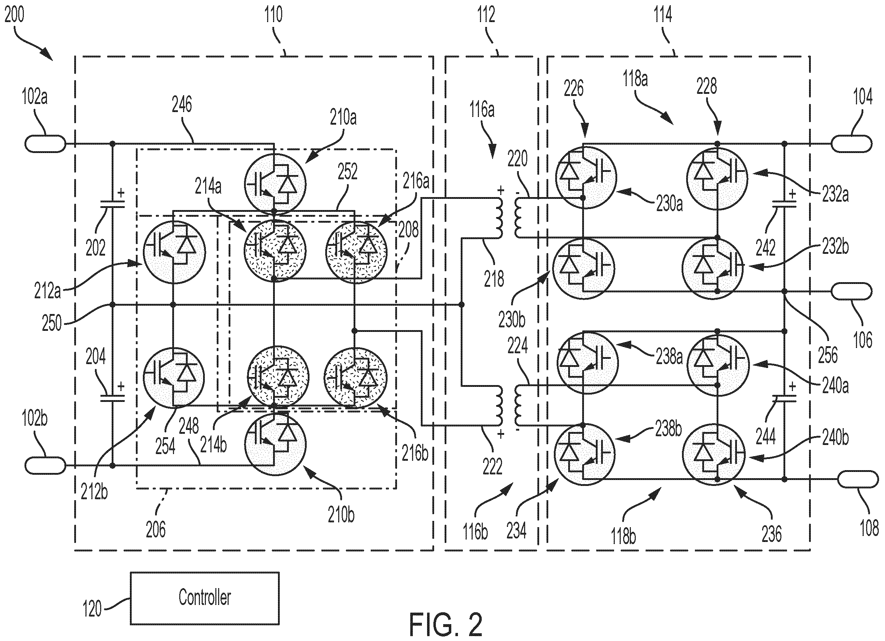

FIG. 2 illustrates a schematic diagram of a power converter 200 according to an example. The power converter 200 may be an example of the power converter 100. Accordingly, examples of components from the power converter 100 are labeled accordingly in the power converter 200. The power converter 200 includes the input 102, the positive output connection 104, the neutral output connection 106, the negative output connection 108, the primary-side converter 110, the transformers 116a, 116b, the secondary-side converters 118a, 118b, and the controller 120. In some examples, the neutral output connection 106 may include a single connection or multiple connections (for example, the first and second neutral output connections 106a, 106b) which may be electrically coupled together. As shown in FIG. 2, the primary-side converter 110 is a sparse active neutral point clamped (SANPC) power converter.

The input 102 includes a first input connection 102a and a second input connection 102b. The primary-side converter 100 includes a positive capacitor 202, a negative capacitor 204, a first group of switching devices 206 ("first switches 206"), and a second group of switching devices 208 ("second switches 208"). The first switches 206 include a first switch 210a, a second switch 210b, a third switch 212a, and a fourth switch 212b. The second switches 208 include a fifth switch 214a, a sixth switch 214b, a seventh switch 216a, and an eighth switch 216b.

The first transformer 116a includes a first primary winding 218 and a first secondary winding 220. The second transformer 116b includes a second primary winding 222 and a second secondary winding 224. The first secondary-side converter 118a may be configured as a full-bridge AC/DC converter, and includes a first switching leg 226 and a second switching leg 228. The first switching leg 226 includes a first switch 230a and a second switch 230b. The second switching leg 228 includes a third switch 232a and a fourth switch 232b.

The second secondary-side converter 118b may be configured as a full-bridge AC/DC converter, and includes a third switching leg 234 and a fourth switching leg 236. The third switching leg 234 includes a fifth switch 238a and a sixth switch 238b. The fourth switching leg 236 includes a seventh switch 240a and an eighth switch 240b. The secondary-side converters 114 further include a first capacitor 242 and a second capacitor 244.

The first input connection 102a is coupled to a positive input bus 246. The second input connection 102b is coupled to a negative input bus 248. The first capacitor 202 is coupled to the positive input bus 246 at a first connection, and to a reference node 250 (for example, a neutral node) at a second connection. The second capacitor 204 is coupled to the reference node 250 at a first connection, and to the negative input bus 248 at a second connection. The first switch 210a is coupled to the positive input bus 246 at a first connection, and to the third switch 212a, the fifth switch 214a, and the seventh switch 216a at a second connection via an intermediate positive bus 252. The second switch 210b is coupled to the fourth switch 212b, the sixth switch 214b, and the eighth switch 216b at a first connection via an intermediate negative bus 254, and is coupled to the negative input bus 248 at a second connection.

The third switch 212a is coupled to the first switch 210a at a first connection, and is coupled to the reference node 250 at a second connection. The fourth switch 212b is coupled to the reference node 250 at a first connection, and is coupled to the second switch 210b at a second connection. The fifth switch 214a is coupled to the first switch 210a at a first connection, and is coupled to the first primary winding 218 at a second connection. The sixth switch 214b is coupled to the first primary winding 218 at a first connection, and is coupled to the second switch 210b at a second connection.

The seventh switch 216a is coupled to the first switch 210a at a first connection, and is coupled to the second primary winding 222 at a second connection. The eighth switch 216b is coupled to the second primary winding 222 at a first connection, and is coupled to the second switch 210b at a second connection.

The first primary winding 218 is coupled to a midpoint of the fifth switch 214a and the sixth switch 216b at a dotted connection, is coupled to the reference node 250 at a non-dotted connection, and is inductively coupled to the first secondary winding 220. The second primary winding 222 is coupled to the reference node 250 at a non-dotted connection, is coupled to a midpoint of the seventh switch 216a and the eighth switch 216b at a dotted connection, and is inductively coupled to the second secondary winding 224.

The first secondary winding 220 is coupled to a midpoint of the first switch 230a and the second switch 230b at a dotted connection, is coupled to a midpoint of the third switch 232a and the fourth switch 232b at a non-dotted connection, and is inductively coupled to the first primary winding 218. The second secondary winding 224 is coupled to a midpoint of the fifth switch 238a and the sixth switch 238b at a dotted connection, is coupled to a midpoint of the seventh switch 240a and the eighth switch 240b at a non-dotted connection, and is inductively coupled to the second primary winding 222.

The first switch 230a is coupled to the positive output connection 104 at a first connection and is coupled to the first secondary winding 220 and the second switch 230b at a second connection. The second switch 230b is coupled to the first secondary winding 220 and the first switch 230a at a first connection and is coupled to a reference node 256 (for example, a neutral node) at a second connection. The third switch 232a is coupled to the positive output connection 104 at a first connection and is coupled to the first secondary winding 220 and the fourth switch 232b at a second connection. The fourth switch 232b is coupled to the third switch 232a and the first secondary winding 220 at a first connection and is coupled to the reference node 256 at a second connection.

The fifth switch 238a is coupled to the reference node 256 at a first connection, and is coupled to the second secondary winding 224 and the sixth switch 238b at a second connection. The sixth switch 238b is coupled to the fifth switch 238a and the second secondary winding 224 at a first connection, and is coupled to the negative output connection 108 at a second connection. The seventh switch 240a is coupled to the reference node 256 at a first connection and is coupled to the second secondary winding 224 and the eighth switch 240b at a second connection. The eighth switch 240b is coupled to the second secondary winding 224 and the seventh switch 240a at a first connection and is coupled to the negative output connection 108 at a second connection.

The first capacitor 242 is coupled to the positive output connection 104 at a first connection and is coupled to the reference node 256 at a second connection. The second capacitor 244 is coupled to the reference node 256 at a first connection and is coupled to the negative output connection 108 at a second connection. In various examples, the controller 120 may be coupled to a control connection of each of the switches 210a, 210b, 212a, 212b, 214a, 214b, 216a, 216b, 230a, 230b, 232a, 232b, 238a, 238b, 240a, 240b to control a switching state of each respective switch.

The power converter 200 may receive DC power at the input connections 102a, 102b. The controller 120 may operate the switches of the primary-side converter 110 to draw the DC power from the input connections 102a, 102b, convert the DC power to AC power, and provide the AC power to the primary windings 218, 222 to induce a voltage on the secondary windings 220, 224. The controller 120 may operate the switches of the secondary-side converters 118a, 118b to draw the induced power from the secondary windings 220, 224, convert the induced power to power of a desired voltage level, and provide the converted power to the output connections 104-108.

In some examples, the neutral output connection 106 may include multiple neutral output connections coupled to the reference node 256. For example, a first neutral output connection (for example, the first neutral output connection 106a) may be coupled to the reference node 256 to act as a neutral connection for the first secondary-side converter 118a, and a second neutral output connection (for example, the second neutral output connection 106b) may be coupled to the reference node 256 to act as a neutral connection for the second secondary-side converter 118b. However, the separate neutral output connections may both be coupled to the reference node 256 and thus may be at the same electric potential. In other examples, such as the example illustrated in FIG. 2, the neutral output connection 106 may include a single neutral output connection which may act as a neutral connection for both of the secondary-side converters 118.

It may be advantageous for the controller 120 to switch the switches of the power converter 200 at zero-current conditions, that is, to implement zero-current switching. For example, it may be advantageous for the controller 120 to switch the switches of the primary-side converter 110 at zero-current conditions. Implementing zero-current switching in the primary-side converter 110 may improve the efficiency of the primary-side converter 110. However, it may not be feasible to provide zero-current switching for all switches of the primary-side converter 110.

In various examples, zero-current switching is provided for the second switches 208 but may not be provided for the first switches 206. However, although zero-current switching may not be provided for the first switches 206, the first switches 206 may be rated lower than the second switches 208 and may therefore suffer reduced losses for switching events when compared to what switching losses would exist if the second switches 208 were not switched at zero current. For example, the first switches 206 may be rated for approximately 1.2 kV, and the second switches 208 may be rated for approximately 1.7 kV. Efficiencies may therefore be supported by providing zero-current switching for the second switches 208, which would suffer greater losses.

Furthermore, certain switching states which correlate to higher losses are forbidden. For example, a current through the first switch 210a may be equal to the sum of the current through the fifth switch 214a and the seventh switch 216a. If both of the switches 214a, 216a are closed when the first switch 210a is switched, the current through the first switch 210a may be greater than if one of the switches 214a, 216a were open when the first switch 210a is switched. Accordingly, the switches 214a, 216a may be forbidden from being simultaneously closed or simultaneously open to avoid high currents through the first switch 210a such that the first switch 210a is not switched while conducting excessively high currents. Similarly, the switches 214b, 216b may be forbidden from being simultaneously closed or simultaneously open to avoid high currents through the second switch 210b.

In this manner, the controller 120 may operate the fifth switch 214a and the seventh switch 216a in complementary states (for example, only in complementary states), and may operate the sixth switch 214b and the eighth switch 216b in complementary states (for example, only in complementary states), such that a current through the first switch 210a and the second switch 210b is minimized. A current through the first switch 210a may thus pass through either the fifth switch 214a or the seventh switch 216a, but not both, at any given time that a current is passing through the first switch 210a. Similarly, a current through the second switch 210b may pass through either the sixth switch 214b or the eighth switch 216b, but not both, at any given time that a current is passing through the second switch 210b. Although the first switch 210a and the second switch 210b may not be switched with zero-current switching, losses are minimized by operating the switches 214a, 216a and 214b, 216b in complementary states.

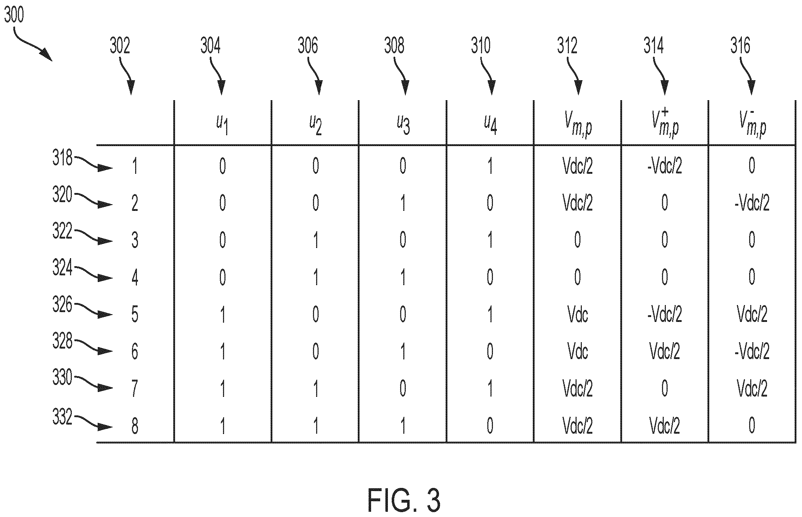

To explain the modulation states in greater detail, FIG. 3 illustrates a chart 300 of switching states for the primary-side converter 110 according to an example. A first column 302 indicates a switching-state number. A second column 304 indicates a value of a first switching signal *u₁.* The first switching signal is provided to the first switch 210a. An inverse of the first switching signal is provided to the third switch 212a. A third column 306 indicates a value of a second switching signal *u₂.* The second switching signal is provided to the fourth switch 212b. An inverse of the second switching signal is provided to the second switch 210b.

A fourth column 308 indicates a value of a third switching signal *u₃.* The third switching signal is provided to the fifth switch 214a. An inverse of the third switching signal is provided to the sixth switch 214b. A fifth column 310 indicates a value of a fourth switching signal *u₄*. The fourth switching signal is provided to the seventh switch 216a. An inverse of the fourth switching signal is provided to the eighth switch 216b.

A sixth column 312 indicates a voltage *V_{m,p}* from the intermediate negative bus 254 to the intermediate positive bus 252 across the second group of switches 208 and the switches 212a, 212b. A seventh column 314 indicates a voltage *V⁺_{m,p}* across the first primary winding 218. An eighth column 216 indicates a voltage *V⁻_{m,p}* across the second primary winding 220. Each of the voltages *V_{m,p}*, *V⁺_{m,p}*, and *V*⁻*_{m,p}* is expressed in terms of Vdc, the voltage from the second input connection 102b to the first input connection 102a across the primary-side converter 100.

As noted above, the columns 304-310 correspond to switching states for the switches 210a-216b. For example, a "0" indicates that the controller 120 provides a control signal to a given switch to render the switch open and non-conducting. A "1" indicates that the controller 120 provides a control signal to a given switch to render the switch closed and conducting. An inverse of a "0" switching signal is a "1" switching signal, and an inverse of a "1" switching signal is a "0" switching signal.

As noted above, the fifth switch 214a and the seventh switch 216a may be operated in complementary states (and, in some examples, may only be operated in complementary states), and the sixth switch 214b and the eighth switch 216b may be operated in complementary states (and, in some examples, may only be operated in complementary states). Thus, the third switching signal *u₃* (which is provided to the fifth switch 214a, and an inverse of which is provided to the sixth switch 214b) and the fourth switching signal *u₄* (which is provided to the seventh switch 216a, and an inverse of which is provided to the eighth switch 216b) have complementary states, as depicted in the chart 300. Stated differently, the third switching signal *u₃* may be forbidden from having the same state as the fourth switching signal *u₄*, and vice versa.

Using a first row 318 corresponding to a first state labeled "1" in the first column 302 as an example of the chart 300, the first switching signal *u₁*, the second switching signal *u₂*, and the third switching signal *u₃* all have a state of "0." Accordingly, the first switch 210a, the fourth switch 212b, and the fifth switch 214a are open and non-conducting (responsive to receiving a control signal from the controller 120 corresponding to the state of "0"), and the third switch 212a, the second switch 210b, and the sixth switch 214b are closed and conducting (responsive to receiving a control signal from the controller 120 corresponding to the inverse of the state of "0"). The fourth switching signal *u₄* has a state of "1." Accordingly, the seventh switch 216a is closed and conducting (responsive to receiving a control signal from the controller 120 corresponding to the state of "1"), and the eighth switch 216b is open and non-conducting (responsive to receiving a control signal from the controller 120 corresponding to the inverse of the state of "1").

Each other row of the chart 300 corresponds to a respective switching state of the primary-side converter 110. A second row 320 corresponds to a second state labeled "2," a third row 322 corresponds to a third state labeled "3," a fourth row 324 corresponds to a fourth state labeled "4," a fifth row 326 corresponds to a fifth state labeled "5," a sixth row 328 corresponds to a sixth state labeled "6," a seventh row 330 corresponds to a seventh state labeled "7," and an eighth row 332 corresponds to an eighth state labeled "8."

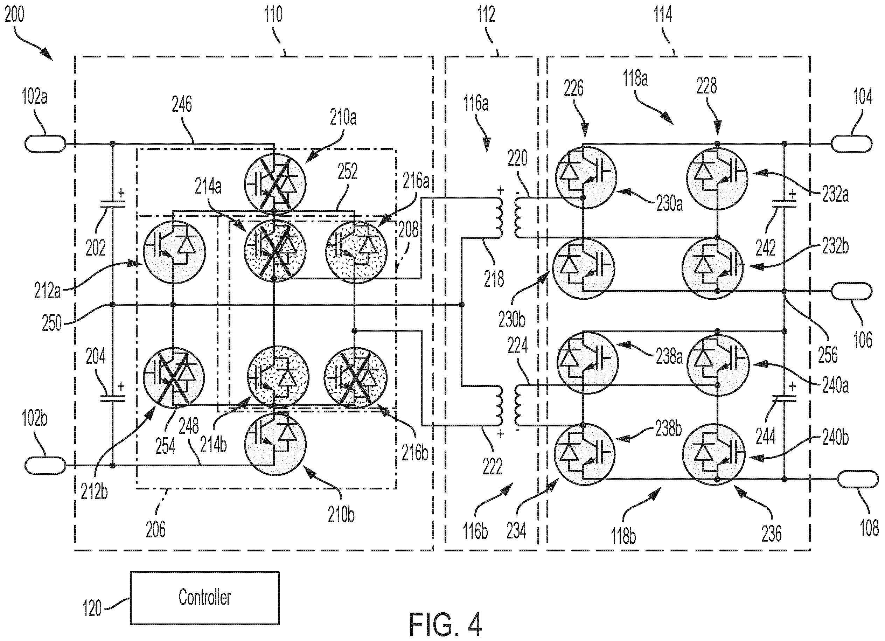

FIG. 4 illustrates a schematic diagram of the power converter 200 in the state corresponding to the first row 318, where the non-conducting switches 210a, 212b, 214a, and 216b are overlaid with an "X" to indicate that they are not conducting. Because the second switch 210b is closed, the fourth switch 212b is coupled to the negative input bus 248. Because the fourth switch 212b is open, a voltage of Vdc/2 is dropped across the open fourth switch 212b. Because the third switch 212a is closed, a voltage of zero is dropped across the closed third switch 212a. Accordingly, a voltage from the intermediate negative bus 254 to the intermediate positive bus 252 (that is, a voltage across the switches 212a, 212b) is equal to Vdc/2, as indicated in the sixth column 312 of the first row 318.

Similarly, because the second switch 210b and the sixth switch 214b are closed, the dotted pole of the first primary winding 218 is coupled to the negative input bus 248. The non-dotted pole of the first primary winding 218 is coupled to the reference node 250. Accordingly, a voltage across the first primary winding 218 from the non-dotted pole to the dotted pole is - Vdc/2 as indicated in the seven column 314 of the first row 318.

Similarly, because the third switch 212a and the seventh switch 216a are closed, the dotted pole of the second primary winding 222 is coupled to the reference node 250. The non-dotted pole of the second primary winding 222 is coupled to the reference node 250. Accordingly, a voltage across the second primary winding 222 is zero, as indicated in the eighth column 316 of the first row 318.

Accordingly, the chart 300 provides a state for each switch of the primary-side converter 110. The chart 300 thus provides a list of possible switching states for the primary-side converter 110, that is, a list of switching states from which forbidden switching states (for example, where *u₃ = u₄*) are omitted. In some examples, a trapezoidal modulation scheme may be implemented by the controller 120 to switch through at least a subset of the allowed switching states.

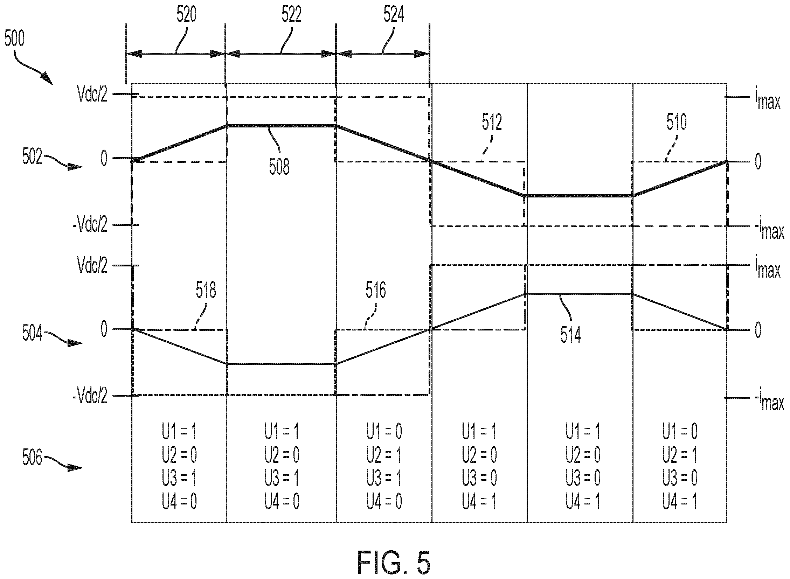

FIG. 5 illustrates a set of graphs 500 depicting operation of the primary-side converter 110 according to an example. The graphs 500 include a first graph 502 and a second graph 504. The first graph 502 corresponds to the first transformer 116a. The second graph 504 corresponds to the second transformer 116b. The graphs 500 also correspond to a list of switching states 506, which illustrate states of the switching signals *u₁*, *u₂*, *u₃*, and *u₄.*

The first graph 502 includes a first current trace 508 depicting a current through the first primary winding 218, a first voltage trace 510 indicating a voltage across the first primary winding 218, and a second voltage trace 512 indicating a voltage across the first secondary winding 220. The second graph 504 includes a second current trace 514 depicting a current through the second primary winding 222, a third voltage trace 516 indicating a voltage across the second primary winding 222, and a fourth voltage trace 518 indicating a voltage across the second secondary winding 224.

As indicated by the first graph 502, over a first time period 520, the primary-side converter 110 is operated in the sixth state corresponding to the sixth row 328, as indicated in the list of switching states 506. As indicated by the seventh column 314 and the first voltage trace 510, a voltage across the first primary winding 218 is Vdc/2. As indicated by the second volage trace 512, a voltage across the first secondary winding 220 is zero. As indicated by the first current trace 508, a current through the first primary winding 218 rises over the first time period 520 to a maximum positive value of *iₘₐₓ.*

Over a second time period 522 beginning immediately after the first time period 520, the primary-side converter 110 remains in the sixth state corresponding to the sixth row 328. As indicated by the second voltage trace 512, a voltage across the first secondary winding 220 transitions from zero to Vdc/2 due to switching in the first secondary-side converter 118a. As indicated by the first current trace 508, the current through the first primary winding 218 stays at the maximum positive current *iₘₐₓ*.

Over a third time period 524 beginning immediately after the second time period 524, the primary-side converter 110 transitions from the sixth state to the fourth state corresponding to the fourth row 324 as indicated by the list of switching states 506. Accordingly, the first switching signal *u₁* and the second switching signal *u₂* transition states, causing the first switch 210a, the second switch 210b, the third switch 212a, and the fourth switch 212b to switch states. Because the current through the first primary winding 218 is not zero (because the current is *iₘₐₓ*), the switches 210a, 210b, 212a, 212b are switched without zero-current switching. However, as discussed above, the switches 210a, 210b, 212a, 212b may have lower voltage ratings than the switches 214a-216b, and may therefore experience lower losses from non-zero-current switching.

Over the third time period 524, and as indicated by the seventh column 314 and the first voltage trace 510, a voltage across the first primary winding 218 is zero. As indicated by the second volage trace 512, a voltage across the first secondary winding 220 remains Vdc/2. As indicated by the first current trace 508, a current through the first primary winding 218 decreases over the third time period 524 to zero by the end of the third time period 524.

The time periods 520-524 occur over a positive half-cycle of the current through the first primary winding 218. As indicated by the remainder of the first graph 502, similar principles apply to the negative half-cycle of the current through the first primary winding 218.

Turning to the second graph 504, over the first time period 520, a voltage across the second primary winding 222 is -Vdc/2 as indicated by the third voltage trace 516 and the eighth column 316 at the sixth row 328. As indicated by the fourth voltage trace 518, a voltage across the second secondary winding 224 is zero. As indicated by the second current trace 514, a current through the second primary winding 222 grows increasingly negative over the first time period 520 to a maximum negative value of *-iₘₐₓ*.

Over the second time period 522 beginning immediately after the first time period 520, the primary-side converter 110 remains in the sixth state corresponding to the sixth row 328. As indicated by the fourth voltage trace 518, a voltage across the second secondary winding 224 transitions from zero to -Vdc/2 due to switching in the second secondary-side converter 118b. As indicated by the second current trace 514, the current through the second primary winding 222 stays at the maximum negative current *-iₘₐₓ*.

Over the third time period 524 beginning immediately after the second time period 524, the primary-side converter 110 transitions from the sixth state to the fourth state corresponding to the fourth row 324 as indicated by the list of switching states 506. Accordingly, a voltage across the second primary winding 222 transitions from -Vdc/2 to zero as indicated by the third voltage trace 516 and as indicated by the eighth column 316 of the fourth row 324. As indicated by the fourth voltage trace 518, a voltage across the second secondary winding 224 remains -Vdc/2. As indicated by the second current trace 514, an absolute value of the current through the second primary winding 222 decreases from the maximum negative current *-iₘₐₓ* towards zero, which the current reaches by the end of the third time period 524.

The time periods 520-524 occur over a negative half-cycle of the current through the second primary winding 222. As indicated by the remainder of the second graph 504, similar principles apply to the positive half-cycle of the current through the second primary winding 222. As illustrated by the current traces 508, 514, the current through the first primary winding 218 is shifted 180° relative to the current through the second primary winding 222 throughout the entire cycles of the currents.

In summary of the foregoing, the primary-side converter 110 may be implemented as an SANPC converter. The controller 120 may operate the first group of switches 206 of the SANPC without zero-current switching, and may operate the second group of switches 208 of the SANPC with zero-current switching. However, because each of the first group of switches 206 may have a lower voltage rating than each of the second group of switches 208, hard-switching losses are reduced.

Furthermore, the controller 120 may implement a trapezoidal modulation scheme to control operate of the SANPC. In implementing the trapezoidal modulation scheme, certain switching states may be forbidden. In particular, forbidden switching states include the switches 214a, 216a being simultaneously closed and the switches 214b, 216b being simultaneously closed. By forbidding these switching states, a current through the first switch 210a and the second switch 210b may be limited. By limiting the current through the switches 210a, 210b, losses may be minimized by the non-zero-current switching operation of the switches 210a, 210b.

In addition to operating efficiently, the power converter 200 may service various load configurations including a symmetrical monopolar configuration and a bipolar configuration. The power converter 200 can power at least two loads in the symmetrical monopolar configuration (for example, a first load coupled across the output connections 104, 106 and a second load coupled across the output connections 106, 108), and/or may power at least one load in the bipolar configuration (for example, a load coupled to the output connections 104-108).

In various examples, examples of the power converter 100 may be able to support any number of loads, including more than two loads. For example, the power converter 100 may be implemented with more than two of the transformers 112, more than two of the secondary-side converters 114, and more than three of the output connections 104-108.

Examples of the power converter 100, such as the power converter 200, may be configured to provide power to multiple unbalanced loads. Unbalanced loads include loads that draw different amounts of power than one another from the power converter 100. For example, the power converter 200 may provide power to a first load coupled to the outputs 104, 106 at one power rating, and may provide power to a second load coupled to the outputs 106, 108 at another power rating. In additional examples of the power converter 100, the power converter 100 may be capable of powering any number of loads which may be balanced or unbalanced.

Various controllers, such as the controller 120, may execute various operations discussed above. The controller 120 may also execute one or more instructions stored on one or more non-transitory computer-readable media, which the controller 120 may include and/or be coupled to, which may result in manipulated data. The non-transitory computer-readable media may include memory and/or storage. In some examples, the controller 120 may include one or more processors or other types of controllers. In one example, the controller 120is or includes at least one processor. In another example, the controller 120 performs at least a portion of the operations discussed above using an application-specific integrated circuit tailored to perform particular operations in addition to, or in lieu of, a processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

Having thus described several aspects of at least one embodiment, it is to be appreciated various alterations, modifications, and improvements will readily occur to those skilled in the art. Such alterations, modifications, and improvements are intended to be part of, and within the scope of, this disclosure. Accordingly, the foregoing description and drawings are by way of example only.

Further examples are provided in the following clauses.

Clause 1. A DC/DC converter comprising:
an input configured to be coupled to a DC power source;
a sparse active neutral point clamped converter (SANPC) coupled to the input;
a plurality of transformers coupled to the SANPC, the plurality of transformers including a first transformer and a second transformer;
a first AC/DC converter coupled to the first transformer;
a second AC/DC converter coupled to the second transformer; and
at least one output coupled to the first AC/DC converter and the second AC/DC converter and configured to provide DC output power to one or more loads.

Clause 2. The DC/DC converter of clause 1, wherein the at least one output includes three output connections.

Clause 3. The DC/DC converter of clause 2, wherein the three output connections are configured to be coupled to the one or more loads in a bipolar configuration.

Clause 4. The DC/DC converter of clause 3, wherein each of the three output connections is configured to be coupled to at least one load of the one or more loads in the bipolar configuration.

Clause 5. The DC/DC converter of clause 2, wherein the three output connections are configured to be coupled to the one or more loads in a symmetrical monopolar configuration.

Clause 6. The DC/DC converter of clause 5, wherein a first set of two of the three output connections is configured to be coupled to a first load in the symmetrical monopolar configuration, and a second set of two of the three output connections is configured to be coupled to a second load in the symmetrical monopolar configuration.

Clause 7. The DC/DC converter of clause 1, further comprising at least one controller, wherein the SANPC includes a plurality of switches, and wherein the at least one controller is configured to operate at least one switch of the plurality of switches with zero-current switching.

Clause 8. The DC/DC converter of clause 7, wherein the plurality of switches includes a first group of one or more switches and a second group of one or more switches, and wherein the at least one controller is configured to:
operate the first group of one or more switches with zero-current switching; and
operate the second group of one or more switches without zero-current switching.

Clause 9. The DC/DC converter of clause 8, wherein the switches of the first group of one or more switches have a first voltage rating and the switches of the second group of one or more switches have a second voltage rating, and wherein the first voltage rating is greater than the second voltage rating.

Clause 10. The DC/DC converter of clause 8, further comprising a positive input bus and a negative input bus coupled to the input, wherein the SANPC includes an intermediate positive bus, an intermediate negative bus, and a reference node, and wherein the second group of one or more switches includes:
a first switch coupled between the positive input bus and the intermediate positive bus;
a second switch coupled between the negative input bus and the intermediate negative bus;
a third switch coupled between the intermediate positive bus and the reference node; and
a fourth switch coupled between the intermediate negative bus and the reference node.

Clause 11. The DC/DC converter of clause 10, wherein the first group of one or more switches includes:
a fifth switch coupled between the intermediate positive bus and the plurality of transformers;
a sixth switch coupled between the plurality of transformers and the intermediate negative bus;
a seventh switch coupled between the intermediate positive bus and the plurality of transformers; and
an eighth switch coupled between the plurality of transformers and the intermediate negative bus.

Clause 12. The DC/DC converter of clause 11, wherein:
the fifth switch and the sixth switch are coupled to a primary winding of the first transformer; and
the seventh switch and the eighth switch are coupled to a primary winding of the second transformer.

Clause 13. The DC/DC converter of clause 11, wherein the at least one controller is configured to:
operate the fifth switch and the seventh switch only in complementary states; and
operate the sixth switch and the eighth switch only in complementary states.

Clause 14. The DC/DC converter of clause 1, further comprising a positive input bus and a negative input bus coupled to the input, wherein the SANPC includes:
an intermediate positive bus;
an intermediate negative bus;
a reference node;

a first switch coupled between the positive input bus and the intermediate positive bus;
a second switch coupled between the negative input bus and the intermediate negative bus;
a third switch coupled between the intermediate positive bus and the reference node; and
a fourth switch coupled between the intermediate negative bus and the reference node.

Clause 15. The DC/DC converter of clause 14, wherein the SANPC further includes:
a fifth switch coupled between the intermediate positive bus and the plurality of transformers;
a sixth switch coupled between the plurality of transformers and the intermediate negative bus;
a seventh switch coupled between the intermediate positive bus and the plurality of transformers; and
an eighth switch coupled between the plurality of transformers and the intermediate negative bus.

Clause 16. The DC/DC converter of clause 15, wherein:
the fifth switch and the sixth switch are coupled to a primary winding of the first transformer; and
the seventh switch and the eighth switch are coupled to a primary winding of the second transformer.

Clause 17. The DC/DC converter of clause 15, wherein the at least one controller is configured to:
operate the fifth switch and the seventh switch only in complementary states; and
operate the sixth switch and the eighth switch only in complementary states.

Clause 18. The DC/DC converter of clause 1, further comprising at least one controller, wherein the SANPC includes:
a first switch coupled to the input,
a second switch coupled to the first switch and to the plurality of transformers, and
a third switch coupled to the first switch and to the plurality of transformers,
wherein the at least one controller is configured to:
   operate the second switch and the third switch only in complementary states such that a current through the first switch passes through either the second switch or the third switch.

Clause 19. The DC/DC converter of clause 18, wherein the SANPC includes:
a fourth switch coupled to the input,
a fifth switch coupled to the fourth switch and to the second switch, and
a sixth switch coupled to the fourth switch and to the third switch,
wherein the at least one controller is further configured to:
   operate the fifth switch and the sixth switch only in complementary states such that a current through the fourth switch passes through either the fifth switch or the sixth switch.

Clause 20. At least one non-transitory computer-readable medium storing thereon sequences of computer-executable instructions for operating a DC/DC converter having a sparse active neutral point clamped converter (SANPC), a plurality of transformers coupled to the SANPC, and a plurality of AC/DC converters coupled to the plurality of transformers, the sequences of computer-executable instructions including instructions that instruct at least one processor to:
operate a first switch and a second switch of the SANPC with zero-current switching;
operate a third switch of the SANPC without zero-current switching, the third switch being coupled to the first switch and the second switch; and
operate the first switch and the second switch in complementary states such that a current through the third switch passes through either the first switch or the second switch.

Clause 21. A method of operating a DC/DC converter having a sparse active neutral point clamped converter (SANPC), a plurality of transformers coupled to the SANPC, and a plurality of AC/DC converters coupled to the plurality of transformers, the method comprising:
operating a first switch and a second switch of the SANPC with zero-current switching;
operating a third switch of the SANPC without zero-current switching, the third switch being coupled to the first switch and the second switch; and
operating the first switch and the second switch in complementary states such that a current through the third switch passes through either the first switch or the second switch.

## Claims

1. A DC/DC converter (100, 200) comprising:
an input (102) configured to be coupled to a DC power source;
a sparse active neutral point clamped converter, SANPC, (110) coupled to the input;
a plurality of transformers (112) coupled to the SANPC, the plurality of transformers including a first transformer (116a) and a second transformer (116b);
a first AC/DC converter (118a) coupled to the first transformer;
a second AC/DC converter (118b) coupled to the second transformer; and
at least one output (104, 106, 108) coupled to the first AC/DC converter and the second AC/DC converter and configured to provide DC output power to one or more loads.

2. The DC/DC converter of claim 1, wherein the at least one output includes three output connections.

3. The DC/DC converter of claim 2, wherein the three output connections are configured to be coupled to the one or more loads in a bipolar configuration.

4. The DC/DC converter of claim 3, wherein each of the three output connections is configured to be coupled to at least one load of the one or more loads in the bipolar configuration.

5. The DC/DC converter of claim 2, wherein the three output connections are configured to be coupled to the one or more loads in a symmetrical monopolar configuration.

6. The DC/DC converter of any of claims 1 to 5, further comprising a positive input bus (246) and a negative input bus (248) coupled to the input, wherein the SANPC includes:
an intermediate positive bus (252);
an intermediate negative bus (254);
a reference node (250);
a first switch (210a) coupled between the positive input bus and the intermediate positive bus;
a second switch (210b) coupled between the negative input bus and the intermediate negative bus;
a third switch (212a) coupled between the intermediate positive bus and the reference node; and
a fourth switch (212b) coupled between the intermediate negative bus and the reference node.

7. The DC/DC converter of claim 6, wherein the SANPC further includes:
a fifth switch (214a) coupled between the intermediate positive bus and the plurality of transformers;
a sixth switch (214b) coupled between the plurality of transformers and the intermediate negative bus;
a seventh switch (216a) coupled between the intermediate positive bus and the plurality of transformers; and
an eighth switch (216b) coupled between the plurality of transformers and the intermediate negative bus.

8. The DC/DC converter of claim 7, wherein:
the fifth switch and the sixth switch are coupled to a primary winding (218) of the first transformer (116a); and
the seventh switch and the eighth switch are coupled to a primary winding (222) of the second transformer (116b).

9. The DC/DC converter of any of claims 7 or 8, wherein the at least one controller is configured to:
operate the fifth switch and the seventh switch only in complementary states; and
operate the sixth switch and the eighth switch only in complementary states.

10. The DC/DC converter of any of claims 1 to 9, further comprising at least one controller (120), wherein the SANPC includes a plurality of switches (210a, 210b, 212a, 212b, 214a, 214b, 216a, 216b), and wherein the at least one controller is configured to operate at least one switch of the plurality of switches with zero-current switching.

11. The DC/DC converter of claim 10, wherein the plurality of switches includes a first group (206) of one or more switches and a second group (208) of one or more switches, and wherein the at least one controller is configured to:
operate the second group of one or more switches with zero-current switching; and
operate the first group of one or more switches without zero-current switching.

12. The DC/DC converter of claim 11, wherein the switches of the first group of one or more switches have a first voltage rating and the switches of the second group of one or more switches have a second voltage rating, and wherein the second voltage rating is greater than the first voltage rating.

13. The DC/DC converter of any of claims 11 or 12, wherein the first group of one or more switches includes:
the first switch (210a);
the second switch (210b);
the third switch (212a); and
the fourth switch (212b);
and wherein the second group of one or more switches includes:
the fifth switch (214a);
the sixth switch (214b);
the seventh switch (216a); and
the eighth switch (216b).

14. At least one non-transitory computer-readable medium storing thereon sequences of computer-executable instructions for operating a DC/DC converter according to any of the above claims 1 to 13, whereby the SANPC comprises a plurality of switches, the sequences of computer-executable instructions including instructions that instruct at least one processor to:
operate at least one switch of the plurality of switches with zero-current switching.

15. A method of operating a DC/DC converter according to any of the above claims 1 to 13, whereby the SANPC comprises a plurality of switches, the method comprising:
operating at least one switch of the plurality of switches with zero-current switching.
